# EUROPÄISCHE PATENTSCHRIFT

(11) **EP 1 893 903 B1**
(45) Veröffentlichungstag und Bekanntmachung des Hinweises auf die Patenterteilung: **21.07.2010**
(21) Anmeldenummer: 06819040.4
(22) Anmeldetag: 06.06.2006
(51) Int. Cl.: F16L 33/207, F16L 13/14

(54) **PRESSFITTING FÜR EIN ROHR**
PRESS FITTING FOR A PIPE
EMMANCHEMENT DE COMPRESSION CONÇU POUR UN TUYAU

(30) Priorität: 21.06.2005 DE 102005028558
(43) Veröffentlichungstag der Anmeldung: 05.03.2008
(73) Patentinhaber: Uponor Innovation AB, 513 81 Fristad (SE)
(72) Erfinder: KERN, Thomas, 97289 Thüngen (DE); RIPPSTEIN, Klaus, 97500 Ebelsbach (DE)
(74) Vertreter: Epping - Hermann - Fischer
(86) Internationale Anmeldenummer: PCT/EP2006/062930
(87) Internationale Veröffentlichungsnummer: WO 2007/031348

(56) Entgegenhaltungen:
- EP-A- 1 477 719
- DE-A1- 19 945 113
- DE-B3- 10 233 559
- DE-U1- 29 907 585
- DE-U1-202004 011 441

## Beschreibung

Die Erfindung betrifft einen Pressfitting für ein Rohr, und zwar insbesondere für ein Kunststoffrohr oder ein Rohr aus einem Kunststoff-Metall-Verbundwerkstoff.

Pressfittings für den Anschluss von Rohren sind in einer Vielzahl von Ausgestaltungen bekannt. Sie weisen zumeist eine Presshülse auf, die mittels eines Presswerkzeuges radial verformt wird, wodurch das von der Pressllülse umgebende Anschlussende des Rohres gegen einen Stützkörper des Fittings gedrückt und abgedichtet wird.

Zur Erleichterung der Montage eines Pressfittings der vorstehend genannten Art ist es bekannt, die Presshülse werksseitig dauerhaft mit dem Fittingkörper zu verbinden. Hierdurch bildet sich zwischen der Presshülse und dem Stützkörper des Fittingkörpers ein einseitig offener Ringraum, in den das anzuschließende Rohrende eingeschoben wird. Beispiele für Pressfittings mit mit dem Fittingkörper verbundener Presshülse sind in DE-A-42 31 623 und DE-C-100 10 573 beschrieben.

Neben der direkten Verbindung von Presshülse und Fittingkörper ist im Stand der Technik auch bekannt, diese beiden Elemente eines Pressfittings über ein ringförmiges Verbindungsteil miteinander zu verbinden. Beispiele für derartige Pressfittinge finden sich in DE-C-43 04 680, EP-A-0 611 911, DE-U-295 03 019, DE-A-198 45 720 und EP-A-0 942 219. Die aus diesen Druckschriften bekannten ringförmigen Verbindungselemente haben zum Teil zusätzlich auch noch die Aufgabe, für eine galvanische Trennung des stirnseitigen Endes des Rohres und des Fittingkörpers sowie für eine Presswerkzeugführung zu sorgen. Dem letztgenannten Zweck dienen auch die in DE-A-100 21 988 und DE-U-299 07 585 beschriebenen Kunststoffringe, die die Presshülsen dieser bekannten Pressfittinge von außen umschließen.

Schließlich ist es auch bekannt, die Presshülsen von Pressfittings mit Lagekontrollöffnungen zu versehen. Diese Öffnungen ermöglichen es dem Monteur, unmittelbar vor der Verpressung zu kontrollieren, ob das anzuschließende Rohrende vorschriftsmäßig auf den Stützkörper des Pressfittings aufgeschoben ist. Beispiele für Pressfittings mit Lagekontrollöffnungen sind in den beiden bereits oben genannten Druckschriften, nämlich in DE-C-100 10 573 und DE-U-295 03 019 sowie ferner auch in DE-C-198 45 720, DE-A-197 41 641, DE-A-196 03 228, DE-A-195 45 361 und DE-U-297 11 313 beschrieben.

Aus DE-B-102 33 559 ist ein Pressfitting mit einer an einem Stützkörper gehaltenen Presshülse bekannt, die an ihrem am Stützkörper gehaltenen Halteende geschlitzt ist, wobei das Halteende von einem axial fixierten Kunststoffring umschlossen ist.

Ferner ist es wünschenswert, wenn man dem Pressfitting ansehen kann, dass eine Verpressung mittels des Presswerkzeuges erfolgt ist (Verpressanzeige). Ein solcher Pressfitting ist in DE-U-299 07 585 beschrieben und weist einen als Führungsring für das Presswerkzeug dienenden Kunststoffring aus einem bei Einwirkung des Presswerkzeuges zerstörbaren Material auf.

Ferner ist aus DE 20 2004 011 441 U1 ein Pressfitting mit Verpressanzeigeelement bekannt, das radial zum Rohr absteht und nicht direkt in den Verpressbereich der Presshülse angeordnet ist. Da das Verpressanzeigeelement durch die Verpressung nicht automatisch entfernt wird, muss das Verpressanzeigeelement manuell entfernt werden.

Aufgabe der Erfindung ist es, einen Pressfitting zu schaffen, der einen multifunktionalen Kunststoffring aufweist, der die Funktionen Verpressanzeige, Sicherung der Presshülse am Fittingkörper und Anschlag für das Presswerkzeug auf einfache Art und Weise in sich vereinigt.

Zur Lösung dieser Aufgabe wird mit der Erfindung ein Pressfitting für ein Rohr, insbesondere ein Kunststoffrohr oder ein Rohr aus einem Kunststoff-Metall-Verbundwerkstoff vorgeschlagen, wobei das Pressfitting versehen ist mit den Merkmalen des Anspruchs 1.

Der erfindungsgemäße Pressfitting weist einen Fittingkörper aus Metall, Kunststoff, einem Kunststoff-Metall-Verbundwerkstoff oder einem keramischen Werkstoff auf, der einen abstehenden Stützkörper (auch Stützhülse genannt) aufweist. Die Außenseite des Stützkörpers ist profiliert und kann Aufnahmen für ein oder mehrere Dichtelemente aufweisen. Auf die Außenseite des Stützkörpers lässt sich das anzuschließende Rohr aufschieben.

Der erfindungsgemäße Pressfitting weist darüber hinaus eine Presshülse aus einem plastisch verformbaren Material (im Regelfall Metall) auf, deren eines stirnseitiges Ende als Halteende ausgebildet ist, an dem die Presshülse direkt an dem Fittingkörper gehalten ist. Im mit dem Fittingkörper verbundenen Zustand umgibt die Presshülse den Stützkörper konzentrisch.

Bei dem erfindungsgemäßen Fitting ist das Halteende der Presshülse mit mindestens einer und insbesondere mehreren, vorzugsweise mindestens drei Randaussparungen versehen, die zur Stirnseite der Presshülse hin offen sind. Diese Aussparungen sind vorzugsweise als Schlitze oder Langlöcher ausgebildet. Die Aussparungen sind vorteilhafterweise in Umfangsrichtung der Presshülse gleichmäßig verteilt angeordnet.

Durch die zuvor beschriebenen Aussparungen erhält die Presshülse an ihrem Halteende eine gewisse Elastizität, die die Montage der Presshülse an dem Fittingkörper erleichtert. Die Presshülse soll nämlich gegen ein unbeabsichtigtes Ablösen vom Fittingkörper an diesem angebracht sein. Unabhängig davon, ob nun diese (kraftschlüssige) Verbindung beispielsweise durch einen Reibschluss oder einen Formschluss realisiert wird, bedarf es einer gewissen Aufweitung der Presshülse an deren Halteende. Diese radiale Aufweitung wird erfindungsgemäß erleichtert, indem die Presshülse an ihrem Halteende geschlitzt ist oder anders ausgeartete Aussparungen aufweist. Aus Stabilitätsgründen ist es von Vorteil, wenn die Presshülse unmittelbar mit dem Fittingkörper verbunden ist. Vorteilhaft ist es dabei, wenn diese Verbindung durch einen Formschluss realisiert werden kann, für den kein spezielles Presswerkzeug oder eine radiale Verpressung von Presshülse und Fittingkörper erfordeilich ist.

Je nachdem, welches Material für die Presshülse verwendet wird, kann die Rückstellfähigkeit der Presshülse an ihrem Halteende nach dessen Aufweitung nicht ausreichend sein, um die kraftschlüssige Verbindung zwischen Presshülse und Fittingkörper aufrecht zu erhalten. Dies gilt beispielsweise bei der Verwendung vergleichsweise weicher metallischer Materialien, wie beispielsweise Aluminium.

Erfindungsgemäß wird nun die Elastizität und Rückstellfähigkeit der Presshülse an deren Halteende dadurch realisiert, dass außen auf der Presshülse ein Kunststoffring aufgesetzt ist, der die Presshülse in Höhe ihrer Aussparungen umschließt und passgenau auf der Presshülse sitzt. Der Kunststoffring kontaktiert den Fittingkörper vorzugsweise nicht und insbesondere nicht zum Zwecke der Halterung der Presshülse; es ist vielmehr die Presshülse, die zwecks Haltcrung an dem Fittingkörper diesen kontaktiert und zwar vorzugsweise direkt also ohne Zwischenmaterial, wobei dieses jedoch nicht ausgeschlossen ist.

Beim Aufschieben der Presshülse auf den Fittingkörper zwecks Verbindung beider Elemente weitet sich nun das Halteende der Presshülse elastisch auf. Dabei verformt sich auch der Kunststoffring elastisch, drückt also nach der Aufweitung von außen radial gegen die Presshülse. Damit ist der zuverlässige Sitz der Presshülse am Fittingkörper auch dann gegeben, wenn auf Grund der Materialwahl der Presshülse deren Halteende sich beim Aufweiten zumindest teilweise plastisch verformt.

Damit der Kunststoffring seine für die obige Funktion erforderliche Lage in Höhe der Aussparungen am Halteende der Presshülse nicht verändert, ist er erfindungsgemäß gegen Bewegungen in axialer Richtung der Presshülse an dieser gesichert. Dies kann durch einen Reibschluss oder einen Formschluss oder durch eine andere kraftschlüssige Verbindung (beispielsweise Verkleben) erfolgen. Vorteilhaft ist eine formschlüssige Verbindung, indem die Presshülse an ihrem Halteende einen Außenringwulst o.dgl. Außenvorsprung aufweist, der bzw. die in eine korrespondierende Umfangsvertiefung an der Innenseite des Kunststoffrings eintaucht bzw. einschnappt oder -rastet.

Alternativ kann der Kraftschluss auch durch Verriegelungsnasen am Kunststoffring erfolgen, die in die Randaussparungen der Presshülse eintauchen und in diesen gegen ein axiales Herausgleiten gesichert sind, was durch Form- oder Reibschluss erfolgen kann. So können sich z.B. die Randaussparungen in ihrer Breite (Umfangserstreckung der Presshülse) zur Stirnseite der Presshülse verjüngen. Die Verriegelungsnasen lassen sich dabei mit Kraft über die Engstellen der Randaussparungen in diese hineinbewegen. Anschließend wird ein Herausrutschen der Verriegelungsnasen aus den Randaussparungen in Folge der Engstellen der Randaussparungen verhindert, wodurch der Kunststoffring an dem Halteende der Presshülse gesichert ist.

Der zuvor beschriebene Kunststoffring ist erfindungsgemäß mit mindestens einem axial abstehenden Vorsprung versehen, der sich ausgehend vom Kunststoffring bis in den Verpressbereich der Presshülse hinein erstreckt. Dieser Vorsprung wird zerstört bzw. vom Kunststoffring abgetrennt (z.B. durch Abscherung), wenn das Presswerkzeug zwecks Verpressung auf die Presshülse einwirkt. Damit wird der Kunststoffring, der, wie oben beschrieben, der Sicherung der Halterung der Presshülse am Stützkörper dient, auch für eine weitere Funktion verwendet, in dem er Träger für den mindestens einen bei Verpressung zerstörbaren bzw. abtrennbaren Vorsprung ist. Zweckmäßigerweise übernimmt der Kunststoffring ferner noch die Funktion eines Anschlags für das Presswerkzeug bzw. der Führung des Presswerkzeugs beim Verpressvorgang.

Sämtliche Funktionen des Kunststoffrings könnten auch von einem (Sicherungs-)Ring aus einem anderen Material als Kunststoff übernommen werden, sofern das Material für die vorgesehenen Zwecke ausreichend elastisch und stabil ist.

In vorteithafter Weiterbildung der Erfindung ist vorgesehen, dass sich der mindestens eine Vorsprung in Umfangsrichtung des Kunststoffrings über weniger als 180 Grad erstreckt. Zweckmäßig ist es, wenn drei Vorsprünge vorgesehen sind, die in Umfangsrichtung des Kunststoffrings gleichmäßig versetzt und voneinander beabstandet angeordnet sind.

Bei dem Kunststoffring mit mindestens einem Vorsprung handelt es sich vorzugsweise um ein Element aus zwei verschiedenen Kunststoffmaterialien, wobei das Material des mindestens einen Vorsprungs spröder sein sollte als das Material des Kunststoffrings. Alternativ ist es aber auch möglich, Kunststoffring und Vorsprung aus ein und demselben Material zu fertigen, wobei die Verbindung zwischen Kunststoffring und Vorsprung als Sollbruchstelle ausgebildet ist, entlang derer der Vorsprung bei Einwirkung des Presswerkzeuges vom Kunststoffring abbricht.

Der Kunststoffring weist vorzugsweise keinerlei radial nach innen ragende Bereiche auf; zweckmäßigerweise existieren also insbesondere keine in die Randaussparungen eintauchenden (Innen-)Vorsprünge oder dergleichen. Die Axialverschiebe- und/oder Verdrehsicherung kann hierbei mit Vorteil durch einen Form-, Reib- oder Stoffschluss einzig und allein zwischen der Außenseite der Presshulse und der Innenseite des Kunststoffringes erfolgen, in dem etwa die Presshülse eine Außenrändelung oder eine andere Oberflächenstruktur (z.B. Grate durch insbesondere geringfügig aufgestelltes Material der Presshülse, was beispielsweise beim Ausstanzen oder Ausbilden der Randaussparungen der Presshülse erfolgen kann) aufweist, die zu einer Verkrallung mit dem gegenüber der Presshülse weicheren Material des Kunststoffrings führt. Auch eine Klebeverbindung oder eine Presspassung zwischen Presshülse und Kunststoffring ist möglich.

Als Verbindung zwischen dem Fittingkörper und der Presshülse bietet sich insbesondere ebenfalls ein Formschluss an. Auch hier ist zweckmäßigerweise an eine Rastverbindung gedacht, wobei die Presshülse an ihrem Halteende einen umlaufenden oder abschnittsweise ausgebildeten Innenvorsprung aufweist, der in eine umlaufende Umfangsvertiefung des Fittingkörpers einrastet. Zweckmäßig ist es für die Montage, wenn sich die Presshülse an ihrem Halteende bis zum Innenvorsprung konisch verjüngt, also eine innenliegende Umfangsschrägfläche aufweist, die beim Aufstecken der Presshülse auf den Fittingkörper über einen Außenwulst des Fittingkörpers gleitet, bis der Innenvorsprung der Presshülse in die hinter dem Außenwulst angeordnete Umfangsvertiefung des Fittingkörpers eintaucht bzw. in deren Höhe positioniert ist. Die Ausbildung von Umfangsvertiefung und Umfangsvorsprung kann auch in zur zuvor angegebenen Art und Weise entgegengesetzter Ausbildung vorgesehen sein.

Die Realisierung eines Formschlusses ohne Reibschluss zwischen Presshülse und Fittingkörper hat den Vorteil, dass sich die Presshülse axial gesichert am Fittingkörper befindet, relativ zu diesem aber noch verdreht werden kann, was bei der Handhabung und Montage des Pressfittings eventuell von Vorteil ist. Um vor der Verpressung von außen erkennen zu können, ob das anzuschließende Rohr vorschriftsmäßig auf den Stützkörper aufgeschoben ist, ist die Presshülse des erfindungsgemäßen Pressfittings zweckmäßigerweise mit Lagekontrollöffnungen an ihrem Halteende versehen. Diese Lagekontrollöffnungen können zusätzlich zu den Randaussparungen der Presshülse in dieser ausgebildet sein, wobei die Lagekontrollöffnungen nicht notwendigerweise zur Stirnseite der Presshülse hin offen sein müssen. Alternativ oder zusätzlich ist es aber auch möglich, dass die Randaussparungen der Presshülse selbst als Lagekontrollöffnungen dienen. In diesem Fall muss durch die Wahl der axialen Länge und die Breite der Aussparungen in Umfangsrichtung sowie die Lage des Kunststoffrings dafür Sorge getragen werden, dass ein- oder beidseitig am Kunststoffring vorbei durch die Randaussparungen hindurch die Lage des anzuschließenden Rohres von außen erkennbar ist.

Die Größe der nicht vom Kunststoffring verdeckten Bereiche der Materialaussparungen der Presshülse könnte durch die axiale Dicke des Kunststoffrings eingeschränkt sein, der, um die oben beschriebene erfindungsgemäße Rückstellfunktion ausüben zu können, in Abhängigkeit von dem Material eine bestimmte Mindestdicke aufweisen sollte. Ein dementsprechend dickerer Kunststoffring setzt somit dementsprechend axial verlängerte Materialaussparungen der Presshülse voraus, so dass diese Materialausspärungen noch als Lagekontrollöffnungen fungieren können. Axial verlängerte Materialaussparungen der Presshülse können aber wiederum diese schwächen, was andererseits unerwünscht ist, da die Presshülse eine gewisse Stabilität benötigt, um nach ihrer Verpressung das anzuschließende Rohr mit ausreichender Kraft gegen den Stützkörper gedrückt halten zu können. Deshalb ist es zweckmäßig, die Dicke des Kunststoffringes in denjenigen Bereichen, die radial mit den Aussparungen der Presshülse fluchten, zu reduzieren. Bei dieser Ausgestaltung der Erfindung weist also der Kunststoffring ein- oder beidseitige Aussparungen auf. Auf diese Weise ist es möglich, trotz Verwendung eines relativ dicken Kunststoffrings verhältnismäßig kurze Aussparungen in der Presshülse vorzusehen, ohne auf den Vorteil verzichten zu müssen, diese Aussparungen zugleich auch für die Lagekontrolle nutzen zu können.

Damit bei einem Kunststoffring der vorstehend beschriebenen Art dessen Aussparungen beim Hantieren und Montieren des Pressfittings stets mit den Aussparungen der Presshülse fluchten, ist es von Vorteil, wenn der Kunststoffring verdrehsicher auf der Presshülse angeordnet ist. Vorzugsweise erfolgt dies dadurch, dass der Kunststoffring einen nach innen vorstehenden Sicherungsvorsprung aufweist, der in eine der Aussparungen am Halteende der Presshülse eintaucht. Der Sicherungsvorsprung braucht dabei nicht bzw. nicht wesentlich nach innen über die Presshülse überzustehen. Der Kunststoffring kann mehrere derartige Sicherungsvorsprünge aufweisen, die in unterschiedliche Aussparungen der Presshülse eintauchen. Diese Sicherungsvorsprünge können dabei zusätzlich auch die Funktion der oben erwähnten Verriegelungsvorsprünge zur axialen Sicherung des Kunststoffrings an der Presshülse übernehmen.

Der erfindungsgemäß vorgesehene Kunststoffring dient in erster Linie dazu, dem Halteende der Presshülse auch dann Elastizität und Rückstellfähigkeit zu verleihen, wenn dies durch das Material der Presshülse nicht notwendigerweise gegeben ist. Darüber hinaus kann der Kunststoffring aber auch zur Führung und Positionierung des Presswerkzeuges dienen. Ferner dient sein mindestens einer Vorsprung als Verpressanzeige, wie oben beschrieben ist. Schließlich ist es möglich, dass der erfindungsgemäß vorgesehene Kunststoffring auch der galvanischen Trennung von Fittingkörper und Rohr dient. Dies ist insbesondere bei Rohren erforderlich, die aus Metall bestehen oder in ihrer Wandung eine Metalllage aufweisen, wie dies bei Rohren aus einem Kunststoff-Metall-Verbundwerkstoff der Fall ist. Der Kunststoffring hat dabei die Aufgabe, das sternseitige Ende des Rohres auf Abstand zu einer radial bzw. im wesentlichen radial verlaufende Fläche des Fittingkörpers zu halten, die der Rohrstirnseite gegenüberliegt, wenn das Rohr auf den Stützkörper aufgeschoben ist. Diese galvanische Trennung kann bei dem erfindungsgemäß vorgesehenen Kunststoffring beispielsweise dadurch realisiert sein, dass der bzw. die Sicherungsvorsprünge, die dem Verdrehsicherungsschutz dienen, weiter nach innen über die Innenseite der Presshülse überstehen und gegebenenfalls durch einen innenliegenden Bund untereinander verbunden sind. Der Kunststoffring hat bei dieser Ausgestaltung dann sozusagen einen außen an der Presshülse anliegenden Ringteil und einen an der Innenseite der Presshülse liegenden Ringteil, die beide über radiale Stege (zuvor als Sicherungsvorsprünge bezeichnet) verbunden sind, welche ihrerseits im an der Presshülse montierten Zustand sich durch die Randaussparungen der Presshülse erstrecken.

Schließlich ist es auch möglich, durch unterschiedliche Farbgebung des Kunststoffrings anzuzeigen, welches Material durch eine mit einem derartigen Pressfitting versehene Leitung strömt. So könnte man beispielsweise für Gasleitungen einen gelben Kunststoffring, für Warmwasserleitungen einen roten Kunststoffring und schließlich für Kaltwasserleitungen einen blauen Kunststoffring verwenden. Selbstverständlich ist jede andere Farbgebung ebenfalls denkbar.

Die Erfindung wird nachfolgend anhand eines Ausführungsbeispiels unter Bezugnahme auf die Zeichnung näher erläutert. Im einzelnen zeigen dabei:
- Fig. 1: als Halbschnitt und in Explosionsdarstellung die einzelnen Teile des erfindungsgemäßen Pressfittings mit angedeutetem Rohran- schlussende,
- Fig. 2: den erfindungsgemäßen Pressfitting im zusammengesetzten Zustand im Halbschnitt,
- Fig. 3: eine Ansicht auf den Kunststoffring entlang der Linie III-III der Fig. 1,
- Fig. 4: eine Ansicht auf den Kunststoffring entlang der Linie IV-IV der Fig. 1 und
- Fig. 5: eine perspektivische Ansicht auf einen Kunststoffring, wie er bei dem Pressfitting gemäß Fign. 1 bis 4 Verwendung finden kann, mit den drei bei Verpressung des Pressfittings zerstörbaren Vorsprüngen.

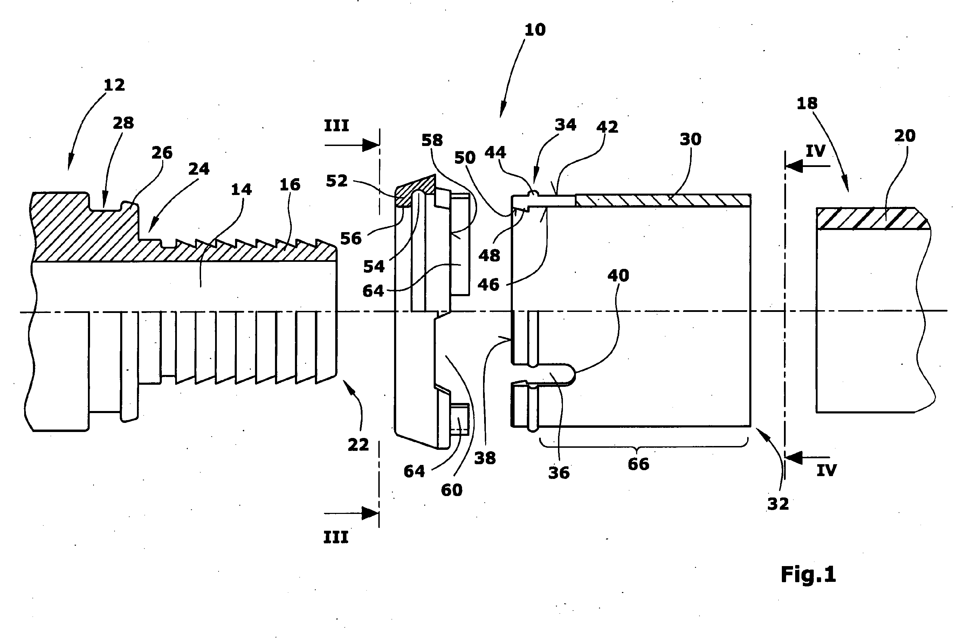

Gemäß Fign. 1 bis 3 weist der Pressfitting 10 einen Fittingkörper 12 auf, durch den hindurch sich ein Durchlass 14 erstreckt. Der Fittingkörper 12 ist mit einem abstehenden Stützkörper 16 versehen, auf den das Ende 18 eines anzuschließenden Rohres 20 aufgeschoben wird. Der Stützkörper 16 weist ein freies stirnseitiges Ende 22 sowie ein diesem gegenüberliegendes Ende 24 auf, in dessen Bereiche der Fittingkörper 12 eine in Umfangsrichtung umlaufende Außenwulst 26 und eine dahinter angeordnete ebenfalls umlaufende außenliegende Umfangsvertiefung 28 aufweist. Diese Umfangsvertiefung 28 liegt auf der dem Stützkörper 16 abgewandten Seite des Außenwulstes 26.

An dem Fittingkörper 12 ist eine Presshülse 30 gehalten, die in diesem Ausführungsbeispiel aus Aluminium bzw. einer Aluminiumlegierung besteht. Diese Presshülse 30 weist ein mit dem freien Ende 22 des Stützkörpers 16 im wesentlichen fluchtendes stirnseitiges Ende 32 sowie ein diesem gegenüberliegendes Halteende 34 auf, an dem die Presshülse 30 mit dem Fittingkörper 12 verbunden ist. Das Halteende 34 ist mit in diesem Ausführungsbeispiel drei Randaussparungen 36 versehen, die zur Stirnseite 38 der Presshülse 30 offen sind. Die Randaussparungen 36, deren Anzahl grundsätzlich beliebig ist, sind als Langlöcher bzw. Schlitze ausgebildet und durch der Stirnseite 38 gegenüberliegende Begrenzungsrandabschnitte 40 begrenzt. An der Außenseite 42 der Presshülse 30 befindet sich an dessen Halteende 34 ein umlaufender von den Aussparungen 36 unterbrochener Außenwulst 44, während die Presshülse 30 an ihrer Innenseite 46 einen ebenfalls umlaufenden und durch die Aussparungen 36 unterbrochenen Innenvorsprung 48 aufweist. Der Innenvorsprung 48 weist eine Hakenform auf und ist mit einer konisch verlaufenden Schrägflache 50 versehen.

Außen auf der Presshülse 30 befindet sich an deren Halteende 34 ein Kunststoffring 52, der eine Innennut 54 aufweist, in die der Außenwulst 44 der Presshülse 30 eingetaucht ist. Auf diese Weise ist der Kunststoffring 52 gegen axiale Bewegungen an der Presshülse 30 gesichert. Darüber hinaus weist der Kunststoffring 52 einen radial einwärts gerichteten Sicherungsvorsprung 56 auf, der im montierten Zustand des Kunststoffrings 52 in eine der Randaussparungen 36 der Presshülse 30 eintaucht.

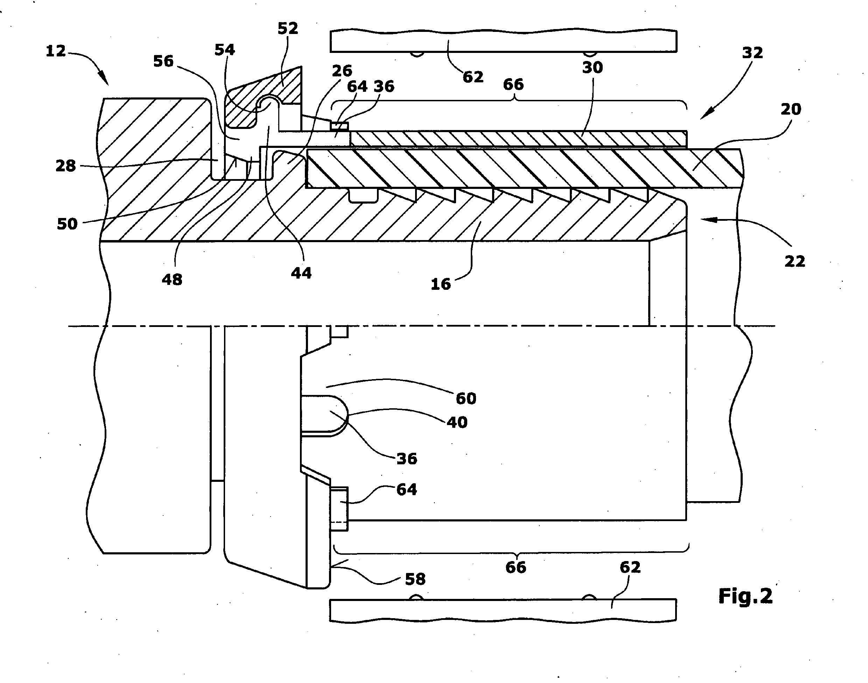

Wie man insbesondere anhand von Fig. 2 erkennen kann, weist der Kunststoffring 52 an seiner den Enden 22 und 32 von Stützkörper 16 bzw. Presshülse 30 zugewandten Seite 58 Aussparungen 60 auf, die mit den Randaussparungen 36 der Presshülse 30 fluchten. Durch diese Aussparungen 60 sind relativ große Bereiche der Randaussparungen 36 der Presshülse 30 freigelegt, so dass diese Bereiche der Randaussparungen 36 die Funktion von Lagekontrollöffnungen zur Überprüfung der ordnungsgemäßen Lage des anzuschließenden Rohres 20 bilden.

Die Montage von Fittingkörper 12, Presshülse 30 und Kunststoffring 52 ist wie folgt.

Zunächst wird der Kunststoffring 52 auf das Halteende 34 der Presshülse 30 aufgeschoben. Dabei kann der Kunststoffring 52 leicht vorgespannt sein, um die Montage und den Sitz auf der Presshülse zu erleichtern. Beim Aufschieben des Kunststoffringes 52 ist dieser so auszurichten, dass sein Sicherungsvorsprung 56 in eine der Randaussparungen 36 der Presshülse 30 eintaucht. Nach dem Aufschieben des Kunststoffringes 52 befindet sich die Außenwulst 44 der Presshülse 30 in der Innennut 54 des Kunststoffrings 52.

Anschließend wird die Presshülse 30 mitsamt dem Kunststoffring 52 aber den Stützkörper 16 geschoben, bis die Schrägfläche 50 des Innenvorsprungs 48 der Presshülse 30 an dem Außenwulst 26 des Fittingkörper 12 anliegt. Zur Fixierung der Presshülse 30 am Fittingkörper 12 wird diese weiter auf den Fittingkörper 12 geschoben, wobei die Aussparungen 36 eine Aufweitung des Halteendes 34 der Presshulse 30 erleichtern. Anschließend federt die Presshülse 30 an ihrem Halteende 34 wieder zurück, so dass der Innenvorsprung 48 in die außenliegende Umfangsvertiefung 28 des Fittingkörpers 12 eintaucht. Der Rückfedereffekt wird durch den zuvor aufgesteckten Kunststoffring 52 deutlich verbessert und unterstützt, was insbesondere bei Verwendung vergleichsweise weicher metallischer Materialien für die Presshülse (beispielsweise Aluminium) gilt. Die kurzzeitig auftretenden Radialkräfte werden durch die Aussparungen 36 und den Kunststoffring 52 kompensiert, so dass der Außendurchmesser am Halteende 34 nach der Montage der Presshülse 30 nicht vergrößert ist. Im montierten Zustand sitzt die Presshülse 30 gegen axiale Alblösungen gesichert am Fittingkörper 12, kann aber dennoch relativ leicht verdreht werden.

Die Vorteile des erfindungsgemäßen Pressfittings lassen sich wie folgt zusammenfassen:
- Keine Deformation der Presshülse 30 nach der Montage auf den Fittingkörper 12.
- Die Presshülse 30 lässt sich nach ihrer Verbindung mit dem Fittingkörper 12 noch verdrehen.
- Die Randaussparungen 36 der Presshülse 30 sind trotz Anbringung des Kunststoffringes 52 noch gut einsehbar und somit als Lagekontrollöffnungen verwendbar.
- Der Kunststoffring 52 ist auch als Anschlagfläche oder sonstige Führung für das in Fig. 2 angedeutete Preßwerkzeug 62 verwendbar (siehe die Anschlag- und Führungsfläche an der Seite 58 des Kunststoffringes 52 in Fig. 2).
- Der Kunststoffring 52 kann auch der galvanischen Trennung des Rohres 20 gegenüber dem Fittingkörper 12 dienen; hierzu bedarf es eines oder mehrerer Innenvorsprünge des Kunststoffringes 52, die durch die Randaussparungen 36 nach innen ragen und vom freien Ende 22 des Stützkörpers 16 aus betrachtet vor dem Außenwulst 26 des Fittingkörpers 12 liegen und somit den direkten Kontakt der Stirnfläche des Anschlussendes 18 des Rohres 20 mit dem Fittingkörper 12 verhindern.

Anhand der Fign. 1 bis 5 wird nachfolgend noch auf eine weitere Besonderheit des hier beschriebenen Pressfittings 10 eingegangen.

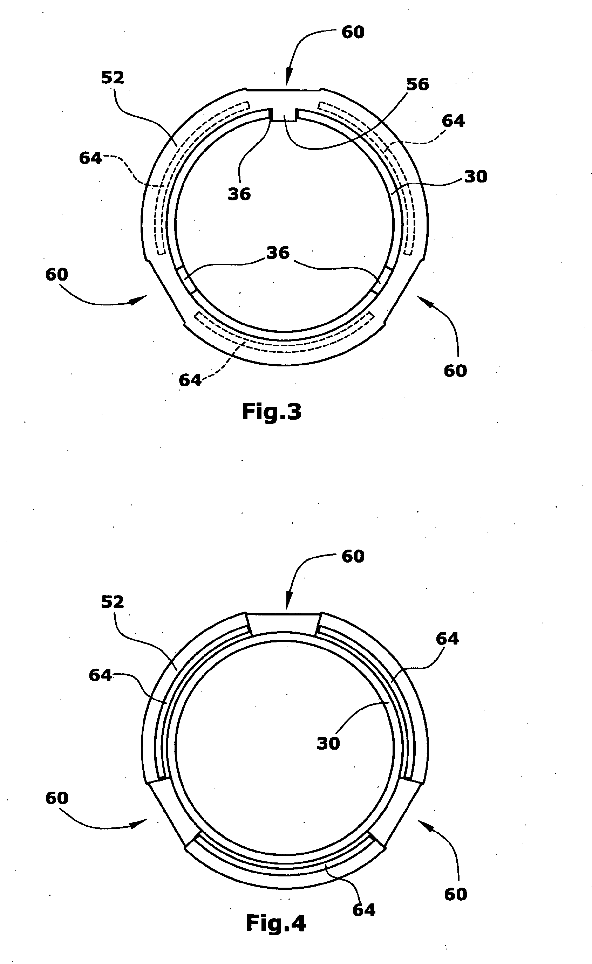

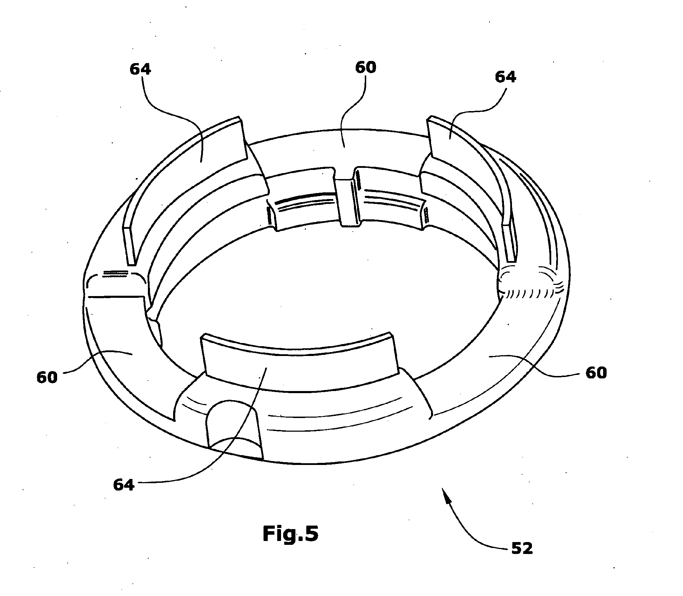

Wie insbesondere anhand der Fign. 1 und 2 zu erkennen ist, weist der Kunststoffring 52 an seiner (Stirn-)Seite 58 drei in Umfangrichtung versetzt gegeneinander angeordnete und voneinander beabstandete Vorsprünge 64 auf, die die Umfangsfläche 63 der Presshülse 30 in deren sich an den Kunststoffring 52 anschließenden Verpressbereich 66 überragen. Die drei Vorsprünge 64 befinden sich innerhalb derjenigen Bereiche des Kunststoffrings 52, die sich zwischen jeweils benachbarten Aussparungen 60 befinden. Die Fign. 4 und 5 zeigen diese Relativanordnung nochmals deutlich. Wie insbesondere anhand der Darstellung von Fig. 2 zu erkennen ist, befinden sich die Vorsprünge 64 damit innerhalb eines Bereichs, in dem das Presswerkzeug 62 beim Verpressen der Presshülse 30, also beim radialen Andrücken gegen die Presshülse 30 auf die Vorsprünge 64 einwirken. Hierdurch scheren die Vorsprünge 64 vom Kunststoffring 52 ab oder werden auf andere Art und Weise zerstört bzw. vom Kunststoffring 52 getrennt. Längs der Verbindung der Vorsprünge 64 mit dem Kunststoffring 52 können Sollbruchstellen angeordnet sein. Alternativ bzw. zusätzlich sind die Vorsprünge 64 aus einem gegenüber dem Material des Kunststoffrings 52 wesentlich spröderen Material gefertigt. Kunststoffring 52 und Vorsprünge 64 können insbesondere als zwei Komponenten-Kunststoffspritzgusswerkstück ausgebildet sein.

Der hier beschriebene Kunststoffring 52 vereinigt also mehrere Funktionen in sich. Zum einen dient er der Sicherung der Presshülse 30 an dem Stützkörper 16 des Fittingkörpers 12. Ferner dient er als Träger für die eine Verpressung anzeigenden Vorsprünge 64. Schließlich übernimmt er über seine eine (Stirn-) Seite 58 eine Anschlag- und Führungsfunktion für das Presswerkzeug 62.

## Patentansprüche

1. Pressfitting für ein Rohr, insbesondere ein Kunststoffrohr oder ein Rohr aus einem Kunststoff-Metall-Verbundwerkstoff, mit
- einem Fittingkörper (12), der einen Stützkörper (16) aufweist, auf den ein anzuschließendes Rohr (20) aufschiebbar ist,
- einer Presshülse (30), die ein Halteende (34), an welchem die Presshülse (30) an dem Fittingkörper gehalten ist, und an ihrer Umfangsfläche (63) einen sich an das Halteende (34) anschließenden Verpressbereich (66) aufweist, in welchem bei Verpressung der Presshülse (30) auf diese ein Presswerkzeug (62) einwirkt,
- wobei die Presshülse (30) an ihrem Halteende (34) mindestens eine zur Stirnseite (38) der Presshülse (30) hin offene Randaussparung (36) aufweist, die einen der Stirnseite (38) der Presshülse (30) gegenüberliegenden Begrenzungsrandabschnitt (40) aufweist, und
- einem Kunststoffring (52), der außen an der Presshülse (30) an deren Halteende (34) anliegt sowie dieses umschließt und gegen Bewegungen in axialer Richtung der Presshülse (30) an dieser gesichert ist,
**dadurch gekennzeichnet,**
- **dass** der Kunststoffring (52) mindestens einen axial abstehenden Vorsprung (64) aufweist, der sich bis in den Verpressbereich (66) der Presshulse (30) hinein erstreckt und der bei Einwirkung des Presswerkzeuges (62) auf die Presshülse (30) zerstörbar und/oder von dem Kunststoffring (52) abtrennbar ausgebildet ist.

2. Pressfitting nach Anspruch 1, **dadurch gekennzeichnet, dass** sich der Vorsprung (64) in Umfangsrichtung des Kunststoffrings (52) über weniger als 180 Grad erstreckt.

3. Pressfitting nach Anspruch 1 oder 2, **dadurch gekennzeichnet, dass** der Kunststoffring (52) drei in Umfangsrichtung versetzt angeordnete Vorsprünge (64) aufweist.

4. Pressfitting nach einem der Ansprüche 1 bis 3, **dadurch gekennzeichnet, dass** das Kunststoffmaterial des Vorsprungs (64) spröder ist als das Material des Kunststoffrings (52) und/oder dass der Vorsprung (64) über eine Sollbruchstelle mit dem Kunststoffring (52) verbunden ist.

5. Pressfilting nach einem der Ansprüche 1 bis 4, **dadurch gekennzeichnet, dass** der Kunststoffring (52) als Anschlag für das Presswerkzeug (62) und/oder zur Führung des Presswerkzeuges (62) vorgesehen ist.

6. Pressfitting nach einem der Ansprüche 1 bis 5, **dadurch gekennzeichnet, dass** der Kunststoffring (52) zwischen der Stirnseite (38) der Presshülse (30) und den gegenüberliegenden Begrenzungsrandabschnitten (40) der Randaussparungen (36) angeordnet ist.

7. Pressfitting nach einem der Ansprüche 1 bis 6, **dadurch gekennzeichnet, dass** der Kunststoffring (52) durch Reib- und/oder Formschluss gegen axiale Bewegungen gesichert mit der Presshülse (30) verbunden ist.

8. Pressfitting nach einem der Ansprüche 1 bis 7, **dadurch gekennzeichnet, dass** an dem Fittingkörper (12) eine außenliegende Umfangsvertiefung (28) oder - alternativ - ein außenliegende Umfangsvorsprung angeordnet ist und dass die Presshülse (30) an ihrem Halteende (34) einen innenliegenden Umfangsvorsprung (48) zum Eintauchen in die Umfangsvertiefung (28) des Fittingkörpers (12) oder - Alternativ - eine innenliegende Umfangsvertiefung aufweist, in die der Umfangsvorsprung des Fittingkörpers (12) eingetaucht ist.

9. Pressfitting nach einem der Ansprüche 1 bis 8, **dadurch gekennzeichnet, dass** der Kunststoffring (52) zur Verdrehsicherung mindestens einen radial nach innen vorstehenden Sicherungsvorsprung (56) aufweist, der in eine der Randaussparungen (36) am Halteende (34) der Presshülse (30) eingetaucht ist.

10. Pressfitting nach einem der Ansprüche 1 bis 9, **dadurch gekennzeichnet, dass** der Kunststoffring (52) derart auf der Presshülse (30) angeordnet ist, dass die Randaussparungen (36) zumindest auf der der Stirnseite (38) der Presshülse (30) abgewandten Seite (58) des Kunststoffringes (52) teilweise freiliegen.

11. Pressfitting nach einem der Ansprüche 1 bis 10, **dadurch gekennzeichnet, dass** der Kunststoffring (52) mit der Stirnseite (38) der Presshülse (30) im wesentlichen fluchtet.

12. Pressfitting nach einem der Ansprüche 1 bis 11, **dadurch gekennzeichnet, dass** der Kunststoffring (52) auf seiner der Stirnseite (38) der Presshülse (30) abgewandten Seite (58) in radialer Verlängerung der Randaussparungen (36) der Presshülse (30) angeordnete Materialaussparungen (60) aufweist.

13. Pressfitting nach Anspruch 12, **dadurch gekennzeichnet, dass** der Kunststoffring (52) mehrere bis in den Verpressbereich (66) der Presshülse. (30) hineinragende Vorsprünge (64) aufweist, die zwischen den Materialaussparungen (60) des Kunststoffrings (52) angeordnet sind.

14. Pressfitting nach einem der Ansprüche 1 bis 13, **dadurch gekennzeichnet, dass** die Presshülse (30) an ihrem Halteende (34) Lagekontrollöffnungen aufweist.

15. Pressfitting nach Anspruch 14, **dadurch gekennzeichnet, dass** die Lagekontrollöffnungen von Bereichen der Randaussparungen (36) der Presshülse (30) gebildet und/oder in Umfangsrichtung betrachtet zwischen diesen angeordnet sind.

## Claims

1. A press fitting for a tube, in particular a plastic tube or a tube made from a plastics/metal composite material, comprising
- a fitting body (12) comprising a support body (16) on which a tube (20) to be connected can be slid,
- a pressing sleeve (30) comprising a retaining end (34) where the pressing sleeve (30) is held on the fitting body, and a pressing zone (66) which is disposed at the circumferential surface (63) of the pressing sleeve and is adjacent to the retaining end (34), a pressing tool (62) acting in the pressing zone when the pressing sleeve (30) is subjected to a pressing operation,
- the pressing sleeve (30), at its retaining end (34), comprising at least one marginal cut-out (36) which is open towards the end face (38) of the pressing sleeve (30), the marginal cut-out having a limiting edge portion (40) opposite the end face (38) of the pressing sleeve (30), and
- a plastic ring (52) resting on the outer face of the pressing sleeve (30) at the retaining end (34) thereof and enclosing it, said plastic ring being secured on the pressing sleeve (30) against movements in axial direction of the latter,
**characterized in that**
- the plastic ring (52) has at least one axially protruding projection (64) which extends into the pressing zone (66) of the pressing sleeve (30) and can be destroyed and/or severed from the plastic ring (52) when the pressing tool (62) acts on the pressing sleeve (30).

2. The press fitting according to claim 1, **characterized in that** the projection (64) extends in the circumferential direction of the plastic ring (52) over less than 180 degrees.

3. The press fitting according to claim 1 or 2, **characterized in that** the plastic ring (52) has three projections (64) which are arranged so as to be offset in the circumferential direction.

4. The press fitting according to any one of claims 1 to 3, **characterized in that** the plastic material of the projection (64) has a higher brittleness than the material of the plastic ring (52) and/or the projection (64) is connected with the plastic ring (52) through a predetermined breaking point.

5. The press fitting according to any one of claims 1 to 4, **characterized in that** the plastic ring (52) is provided as a stop for the pressing tool (62) and/or for guiding the pressing tool (62).

6. The press fitting according to any one of claims 1 to 5, **characterized in that** the plastic ring (52) is arranged between the end face (38) of the pressing sleeve (30) and the opposite limiting edge portions (40) of the marginal cut-outs (36).

7. The press fitting according to any one of claims 1 to 6, **characterized in that** the plastic ring (52) is connected with the pressing sleeve (30) by means of a frictional and/or positive fit and so as to be secured against axial movements.

8. The press fitting according to any one of claims 1 to 7, **characterized in that** an external circumferential depression (28) or - alternatively - an external circumferential projection is arranged on the fitting body (12) and that the pressing sleeve (30) has its retaining end (34) provided with an internal circumferential projection (48) for engaging in the circumferential depression (28) of the fitting body (12) or - alternatively - an internal circumferential depression in which a circumferential projection of the fitting body (12) is engaged.

9. The press fitting according to any one of claims 1 to 8, **characterized in that**, in order to be secured against rotation, the plastic ring (52) has at least one locking protrusion (56) projecting radially inwards and being engaged in one of the marginal cut-outs (36) at the retaining end (34) of the pressing sleeve (30).

10. The press fitting according to any one of claims 1 to 9, **characterized in that** the plastic ring (52) is arranged on the pressing sleeve (30) such that the marginal cut-outs (36) are partially exposed at least on the side (58), facing away from the end face (38) of the pressing sleeve (30), of the plastic ring (52).

11. The press fitting according to any one of claims 1 to 10, **characterized in that** the plastic ring (52) is substantially aligned with the end face (38) of the pressing sleeve (30).

12. The press fitting according to any one of claims 1 to 11, **characterized in that** the plastic ring (52) comprises material recesses (60) arranged on its side (58) facing away from the end face (38) of the pressing sleeve (30) in a radial extension of the marginal cut-outs (36) of the pressing sleeve (30).

13. The press fitting according to claim 12, **characterized in that** the plastic ring (52) comprises several projections (64) projecting into the pressing zone (66) of the pressing sleeve (30) and being arranged between the material recesses (60) of the plastic ring (52).

14. The press fitting according to any one of claims 1 to 13, **characterized in that** the pressing sleeve (30) comprises position checking openings at its retaining end (34).

15. The press fitting according to claim 14, **characterized in that** the position checking openings are formed by areas of the marginal cut-outs (36) of the pressing sleeve (30) and/or are arranged between these as seen in the circumferential direction.

## Revendications

1. Raccord à sertir pour un tuyau, en particulier un tuyau en plastique ou un tuyau en matière composite plastique/métal, comprenant
- un corps de raccord (12) qui présente un corps d'appui (16) sur lequel un tuyau à raccorder (20) peut être enfilé,
- un manchon de sertissage (30) qui présente une extrémité de maintien (34) sur laquelle le manchon de sertissage (30) est maintenu sur le corps de raccord ainsi que, sur sa surface périphérique (63), une zone de sertissage (66) qui se raccorde à l'extrémité de maintien (34) et dans laquelle, en cas de sertissage du manchon de sertissage (30), un outil à sertir (62) agit sur celle-ci,
- le manchon de sertissage (30) présentant à son extrémité de maintien (34) au moins un dégagement de bordure (36) qui est ouvert vers le côté frontal (38) du manchon de sertissage (30) et qui présente une section de limitation de bordure (40) du côté opposé au côté frontal (38) du manchon de sertissage (30), et
- une bague en plastique (52) qui porte extérieurement sur le manchon de sertissage (30) au niveau de son extrémité de maintien (34) et entoure celle-ci et qui est arrêtée sur le manchon de sertissage (30) par rapport aux mouvements en sens axial de celle-ci,
**caractérisé en ce que**
- la bague en plastique (52) présente au moins une saillie (64) écartée axialement qui s'étend jusque dans la zone de sertissage (66) du manchon de sertissage (30) et qui est constituée de façon à se détruire sous l'effet de l'outil à sertir (62) sur le manchon de sertissage (30) et/ou à se détacher de la bague en plastique (52).

2. Raccord à sertir selon la revendication 1, **caractérisé en ce que** la saillie (64) s'étend sur moins de 180 degrés dans le sens périphérique de la bague en plastique (52).

3. Raccord à sertir selon la revendication 1 ou 2, **caractérisé en ce que** la bague en plastique (52) présente trois saillies (64) disposées de façon décalée en sens périphérique.

4. Raccord à sertir selon l'une des revendications 1 à 3, **caractérisé en ce que** la matière plastique de la saillie (64) est plus cassante que la matière de la bague en plastique (52) et/ou que la saillie (64) est reliée à la bague en plastique (52) par un point destiné à la rupture.

5. Raccord à sertir selon l'une des revendications 1 à 4, **caractérisé en ce que** la bague en plastique (52) est prévue comme butée pour l'outil à sertir (62) et/ou pour le guidage de l'outil à sertir (62).

6. Raccord à sertir selon l'une des revendications 1 à 5, **caractérisé en ce que** la bague en plastique (52) est disposée entre le côté frontal (38) du manchon de sertissage (30) et les sections de limitation de bordure (40) des dégagements de bordure (36) qui sont situées du côté opposé.

7. Raccord à sertir selon l'une des revendications 1 à 6, **caractérisé en ce que** la bague en plastique (52) est reliée au manchon de sertissage (30) de façon à être arrêtée par engagement par friction et/ou par blocage par rapport aux mouvements axiaux.

8. Raccord à sertir selon l'une des revendications 1 à 7, **caractérisé en ce qu'**une cavité périphérique extérieure (28) ou - en variante - une saillie périphérique extérieure est disposée sur le corps de raccord (12) et **en ce que** le manchon de sertissage (30) présente à son extrémité de maintien (34) une saillie périphérique intérieure (48) destinée à s'enfoncer dans la cavité périphérique (28) du corps de raccord (12) ou - en variante - une cavité périphérique intérieure dans laquelle s'enfonce la saillie périphérique du corps de raccord (12).

9. Raccord à sertir selon l'une des revendications 1 à 8, **caractérisé en ce que** la bague en plastique (52) présente comme sûreté anti-rotation au moins une saillie de sûreté (56) qui dépasse radialement vers l'intérieur et qui s'enfonce dans un des dégagements de bordure (36) à l'extrémité de maintien (34) du manchon de sertissage (30).

10. Raccord à sertir selon l'une des revendications 1 à 9, **caractérisé en ce que** la bague en plastique (52) est disposée de telle façon sur le manchon de sertissage (30) que les dégagements de bordure (36) sont partiellement découverts du moins du côté (58) de la bague en plastique (52) qui est situé du côté opposé au côté frontal (38) du manchon de sertissage (30).

11. Raccord à sertir selon l'une des revendications 1 à 10, **caractérisé en ce que** la bague en plastique (52) est sensiblement en alignement avec le côté frontal (38) du manchon de sertissage (30).

12. Raccord à sertir selon l'une des revendications 1 à 11, **caractérisé en ce que** la bague en plastique (52) présente, de son côté (58) opposé au côté frontal (38) du manchon de sertissage (30), des dégagements de matière (60) disposés dans le prolongement radial des dégagements de bordure (36) du manchon de sertissage (30).

13. Raccord à sertir selon la revendication 12, **caractérisé en ce que** la bague en plastique (52) présente plusieurs saillies (64) qui font saillie jusque dans la zone de sertissage (66) du manchon de sertissage (30) et qui sont disposées entre les dégagements de matière (60) de la bague en plastique (52).

14. Raccord à sertir selon l'une des revendications 1 à 13, **caractérisé en ce que** le manchon de sertissage (30) présente des ouvertures de contrôle de position (34) à son extrémité de maintien (34).

15. Raccord à sertir selon la revendication 14, **caractérisé en ce que** les ouvertures de contrôle de position sont formées par des zones des dégagements de bordure (36) du manchon de sertissage (30) et/ou disposées entre celles-ci en regardant en sens périphérique.
